# NEUE EUROPÄISCHE PATENTSCHRIFT

(11) **EP 2 961 621 B2**
(45) Veröffentlichungstag und Bekanntmachung des Hinweises auf die Entscheidung über den Einspruch: **04.09.2019**
(45) Hinweis auf die Patenterteilung: 30.11.2016
(21) Anmeldenummer: 14766390.0
(22) Anmeldetag: 07.08.2014
(51) Int. Cl.: B60F 3/00, F41H 7/02

(54) **SCHWIMMMODUL FÜR EIN MILITÄRISCHES FAHRZEUG**
BUOYANCY MODULE FOR A MILITARY VEHICLE
MODULE DE FLOTTABILITÉ POUR VÉHICULE MILITAIRE

(30) Priorität: 30.08.2013 DE 102013109500
(43) Veröffentlichungstag der Anmeldung: 06.01.2016
(73) Patentinhaber: Krauss-Maffei Wegmann GmbH & Co. KG, 80997 München (DE)
(72) Erfinder: BACHMANN, Harald, 81475 München (DE); BAUS, Rüdiger, 80997 München (DE)
(74) Vertreter: Feder Walter Ebert
(86) Internationale Anmeldenummer: PCT/DE2014/100287
(87) Internationale Veröffentlichungsnummer: WO 2015/027989

(56) Entgegenhaltungen:
- EP-A1- 0 069 621
- EP-A1- 0 872 366
- EP-A2- 1 547 829
- WO-A1-02/12045
- WO-A1-2010/085169
- WO-A1-2010/097653
- DE-A1- 1 530 911
- DE-A1- 1 962 058
- DE-A1- 2 147 177
- DE-A1- 19 963 423
- DE-B- 1 281 861
- DE-U1-202010 011 040
- DE-U1-202011 004 295
- FR-A- 1 329 023
- US-A- 3 229 781
- US-B1- 6 626 712

## Beschreibung

Die Erfindung betrifft ein Schwimmmodul mit einem Auftriebskörper für ein insbesondere militärisches Fahrzeug, das zum Betrieb des Fahrzeugs als Wasserfahrzeug an diesem befestigbar ist. Ferner betrifft die Erfindung ein insbesondere militärisches Fahrzeug mit einem Grundmodul insbesondere zur Aufnahme von Besatzungsmitgliedern.

Militärische Fahrzeuge, wie beispielsweise Kampfpanzer, Schützenpanzer, Brückenlegepanzer oder gepanzerte Transportfahrzeuge weisen häufig einen modularen Aufbau auf, bei welchem das Fahrzeug durch wahlweise Anbringung entsprechender Module für bestimmte Einsatzzwecke missionsspezifisch nutzbar gemacht werden kann.

Die Fahrzeuge weisen dabei in der Regel ein Grundmodul auf, welches zum Aufbau verschiedener Fahrzeugvarianten mit unterschiedlichen Zusatzmodulen kombiniert werden kann.

Bei Amphibienfahrzeugen, die sowohl für Fahrten an Land als auch für Fahrten zu Wasser genutzt werden, ist häufig vorgesehen, dass diese für die Wasserfahrt mit einem zusätzlichen Schwimmmodul ausgestattet werden. Das Schwimmmodul weist einen in der Regel großvolumigen Auftriebskörper auf, der während der Wasserfahrt für den erforderlichen Auftrieb sorgt und ein zu tiefes Eintauchen des Fahrzeugs verhindern soll. Ein solches Amphibienfahrzeug wird beispielsweise in der EP 0 872 366 A1 beschrieben.

Als problematisch hat sich in diesem Zusammenhang erwiesen, dass die Auftriebskörper ein zum Teil ganz beträchtliches Volumen aufweisen. Auch im Vergleich zu anderen, an dem Fahrzeug anordbaren Zusatzmodulen kann dies zu einer erheblichen Vergrößerung der Fahrzeugabmessungen führen, aufgrund welcher unter Umständen Transport- oder Verlademaße nicht eingehalten werden können.

Vor diesem Hintergrund stellt sich die Erfindung die **Aufgabe**, ein Fahrzeug anzugeben, welches sich auch bei Anbringung eines vergleichsweise großvolumigen Schwimmmoduls durch kompakte Abmessungen auszeichnet.

Im Hinblick auf ein Schwimmmodul der eingangs genannten Art wird die Aufgabe mit den Merkmalen des Patentanspruchs 1 **gelöst** .

Durch die Anordnung eines für die Landfahrt dienenden Landfahraggregats an dem Schwimmmodul, ist es nicht erforderlich, an dem Grundmodul einen Bauraum für das entsprechende Landfahraggregat vorzuhalten. Das entsprechende Landfahraggregat kann in geeigneter Position an dem großvolumigen Schwimmmodul angebracht werden. Das Grundmodul kann insgesamt kompakter ausgebildet werden, so dass die Abmessungen des aus dem Grundmodul und dem Schwimmmodul zusammengesetzten Fahrzeugs insgesamt verringert werden.

Gemäß einer vorteilhaften Ausgestaltung der Erfindung ist das Landfahraggregat innerhalb des Auftriebskörpers angeordnet. Durch die Anordnung des Landfahraggregats im Inneren des Auftriebskörpers kann das Landfahraggregat vor der Einwirkung von Wasser geschützt werden. Es ergibt sich zudem eine kompakte Bauweise, bei welcher das Landfahraggregat von außen nicht sichtbar ist.

Bevorzugt weist das Schwimmmodul eine Schnittstelle auf, über welche das Landfahraggregat mit anderen Fahrzeugkomponenten zusammenwirken kann. Über die Schnittstelle kann eine Verbindung zwischen dem Landfahraggregat und anderen Fahrzeugkomponenten hergestellt werden, insbesondere solchen Fahrzeugkomponenten, die in dem Grundmodul angeordnet sind. Besonders bevorzugt ist die Schnittstelle als Steckverbindung ausgebildet, so dass die Verbindung zwischen dem Landfahraggregat und der anderen Fahrzeugkomponente durch einen Einsteckvorgang hergestellt und durch einen Aussteckvorgang gelöst werden kann.

Vorteilhaft ist es ferner, wenn das Schwimmmodul eine schiffsbugförmige Außenkontur aufweist. Durch eine derartige Außenkontur des Schwimmmoduls kann das Strömungsverhalten des gesamten Fahrzeugs im Wasser verbessert werden. Ein für die Landfahrt optimiertes Fahrzeug kann durch das Schwimmmodul eine Außenkontur erhalten, die der eines Wasserfahrzeugs ähnelt. Hierdurch ergeben sich dann bei der Wasserfahrt günstige Strömungseigenschaften.

Das Schwimmmodul kann aus einem Leichtbauwerkstoff, insbesondere aus Aluminium, Magnesium, Titan oder einem Faserverbundwerkstoff, bestehen. Durch die Verwendung eines Leichtbauwerkstoffs für das Schwimmmodul wird erreicht, dass das Gewicht des Schwimmmoduls einen möglichst geringen Anteil am Gesamtgewicht des Fahrzeugs ausmacht und somit auch das Gesamtgewicht des Fahrzeugs sinkt.

Eine bevorzugte Ausgestaltung sieht vor, dass das Landfahraggregat als elektrischer, hydraulischer oder pneumatischer Verbraucher oder als elektrische, hydraulische oder pneumatische Energiequelle ausgebildet ist. Das Landfahraggregat kann beispielsweise als Kühlanlage, ABC-Anlage, Tank, Batterieanlage, Stromversorgungseinheit, Hydraulikpumpe oder als Kompressor ausgebildet sein.

Bei einem Fahrzeug der eingangs genannten Art wird die Aufgabe durch ein zum Betrieb des Fahrzeugs als Wasserfahrzeug an diesem anordbares Schwimmmodul **gelöst**, welches ein oder mehrere der zuvor beschriebenen Merkmale aufweist.

Es ergeben sich die bereits im Zusammenhang mit dem Schwimmmodul beschriebenen Vorteile.

Eine vorteilhafte Ausgestaltung sieht vor, dass das Schwimmmodul derart ausgebildet ist, dass es das Grundmodul bugseitig und/oder seitlich umgreift, so dass das Schwimmmodul in den für das Strömungsverhalten relevanten Bereichen des Fahrzeugs am Bug bzw. an den Seiten die Außenkontur des Fahrzeugs bildet. Hierdurch kann das Strömungsverhalten des Fahrzeugs bei der Wasserfahrt maßgeblich durch das Schwimmmodul bestimmt werden.

Vorteilhaft ist es ferner, wenn das Schwimmmodul oberhalb des Grundmoduls anordbar ist, so dass die Dachkontur des Fahrzeugs durch das Schwimmmodul bestimmt wird. Der Dachkontur kommt eine besondere Bedeutung zu, da diese bei Wasserfahrt des Fahrzeugs aus dem Wasser herausragt und damit sichtbar ist. Durch das Schwimmmodul kann eine geeignete Dachkontur vorgegeben werden, welche beispielsweise besonders unauffällig ist, um eine Aufklärung des Fahrzeugs bei einem militärischen Einsatz zu erschweren. Zudem kann über das Schwimmmodul der Abstand zwischen der Dachkontur des Fahrzeugs und der Wasserlinie vorgegeben werden.

Optional kann das Schwimmmodul derart an dem Grundmodul anordbar sein, dass durch das Schwimmmodul Lufteintritts- und/oder Luftaustrittsöffnungen des Grundmoduls abgedichtet werden. Dies bringt den Vorteil mit sich, dass die Lufteintritts- und/oder Luftaustrittsöffnungen bei Wasserfahrt gegen das Eindringen von Wasser geschützt sind.

Bevorzugt weist das Schwimmmodul eine Ausnehmung auf, welche derart angeordnet ist, dass eine Luke des Grundmoduls beim Betrieb des Fahrzeugs als Wasserfahrzeug geöffnet werden kann. Durch die Ausnehmung wird erreicht, dass an dem Grundmodul vorhandene Luken auch dann benutzt werden können, wenn das Schwimmmodul mit dem Grundmodul verbunden ist. Die Ausnehmung ist besonders bevorzugt im Bereich des Hecks des Fahrzeugs oder im Dachbereich des Fahrzeugs angeordnet.

Gemäß einer vorteilhaften Ausgestaltung weist das Fahrzeug ein Missionsmodul zum Betrieb des Fahrzeugs als Landfahrzeug auf, welches anstelle des Schwimmmoduls wahlweise mit dem Grundmodul verbindbar ist. Das Schwimmmodul kann gegen das Missionsmodul ausgetauscht werden, sobald das Fahrzeug das Wasser verlassen hat.

Eine bevorzugte Ausgestaltung sieht vor, dass ein Wasserantrieb zum Antrieb des Fahrzeugs bei Wasserfahrt an dem Schwimmmodul angeordnet ist. Der Wasserantrieb kann beispielsweise als Wasserstrahlantrieb oder als Propellerantrieb ausgebildet sein.

Besonders bevorzugt weist das Grundmodul eine Schnittstelle auf, über welche der Wasserantrieb mit Energie versorgt wird. Die Schnittstelle ist als Steckverbindung ausgebildet. Vorzugsweise wird der Wasserantrieb über die Schnittstelle mit dem Hauptantrieb des Fahrzeugs verbunden.

Das Grundmodul weist bevorzugt eine Detektionseinrichtung auf, über welche das mit dem Grundmodul verbundene Modul detektiert werden kann. Anhand der Detektionseinrichtung kann beispielsweise festgestellt werden, dass ein Schwimmmodul mit dem Grundmodul verbunden ist und entsprechende Einstellungen automatisch vorgenommen werden. Beispielsweise kann die Luftansaugung durch das Grundmodul derart eingestellt werden, dass bei verbundenem Schwimmmodul Luft ausschließlich über solche Lufteinlassöffnungen angesaugt wird, die oberhalb der Wasserlinie liegen.

Weitere Vorteile und Einzelheiten der Erfindung sollen nachfolgend anhand eines in den beigefügten Zeichnungen dargestellten Ausführungsbeispiels erläutert werden. Darin zeigen:
- Fig. 1: eine perspektivische Ansicht eines militärischen Fahrzeug gemäß der Erfindung,
- Fig. 2: eine andere perspektivische Ansicht des Fahrzeugs,
- Fig. 3: eine Schnittdarstellung des Fahrzeugs gemäß Fig. 1 entlang einer vertikalen Querebene des Fahrzeugs,
- Fig. 4: eine Schnittdarstellung des Fahrzeug gemäß Fig. 1 entlang einer vertikalen Längsebene des Fahrzeugs,
- Fig. 5: eine Schnittdarstellung des Fahrzeugs gemäß Fig. 1 entlang einer horizontalen Schnittebene,
- Fig. 6: eine perspektivische Explosionsdarstellung des Fahrzeugs gemäß Fig. 1,
- Fig. 7: eine geschnittene Explosionsdarstellung des Fahrzeugs gemäß Fig. 7,
- Fig. 8: eine perspektivische Ansicht eines zweiten militärischen Fahrzeugs und
- Fig. 9: eine andere perspektivische Ansicht des Fahrzeugs gemäß Fig. 8.

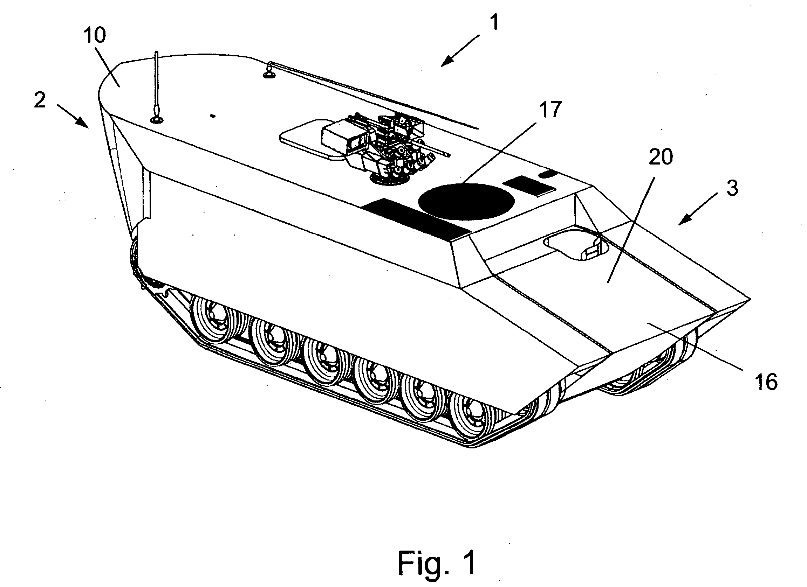

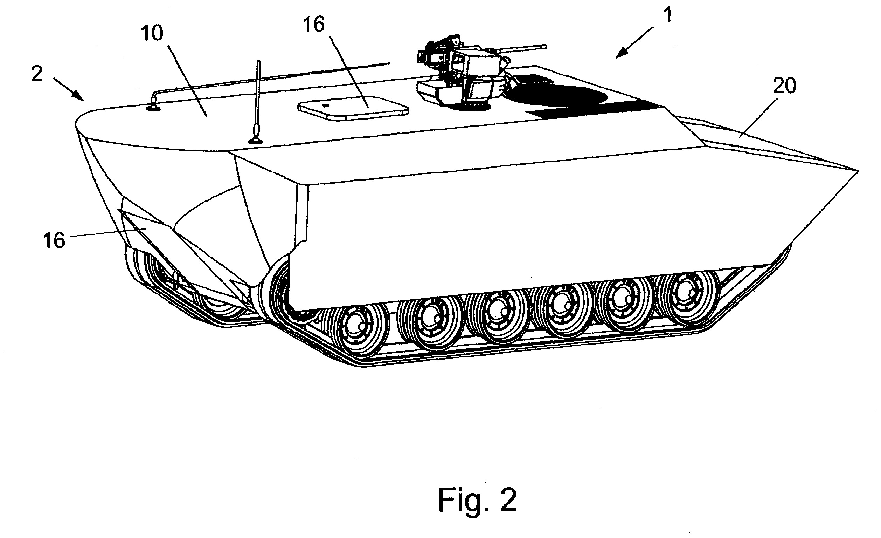

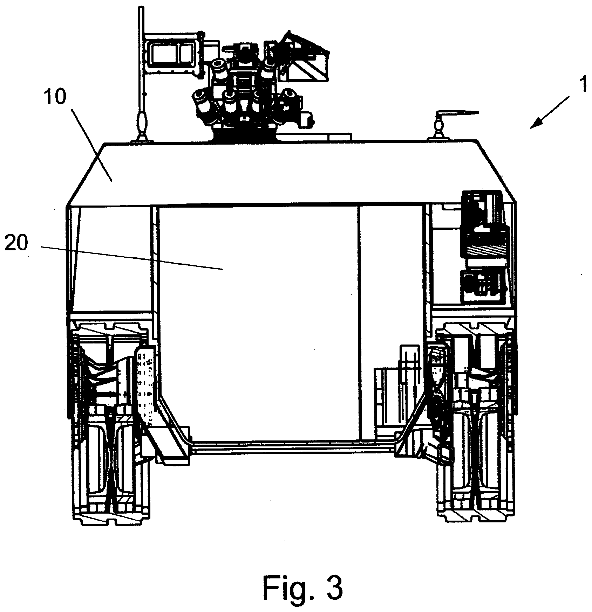

In den Fig. 1 bis Fig. 5 ist ein amphibisches Fahrzeug 1 dargestellt, welches als militärisches Kampffahrzeug ausgebildet ist. Wie nachfolgend erläutert werden wird, ist das Fahrzeug 1 modular aufgebaut und kann sowohl als Landfahrzeug als auch als Wasserfahrzeug eingesetzt werden.

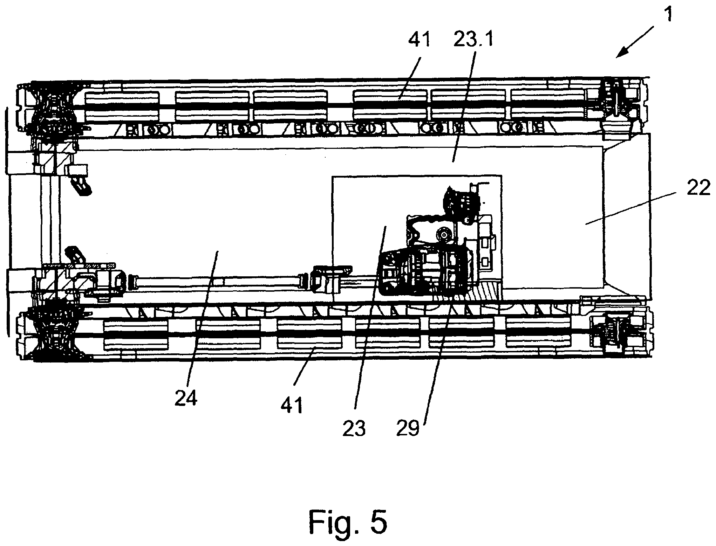

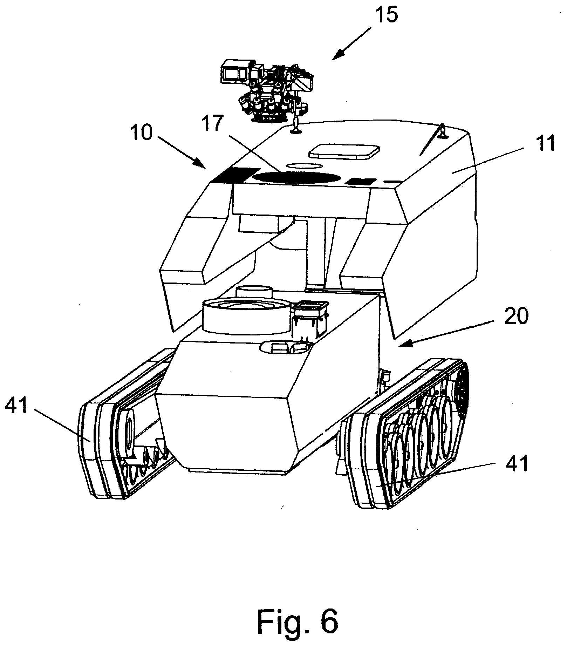

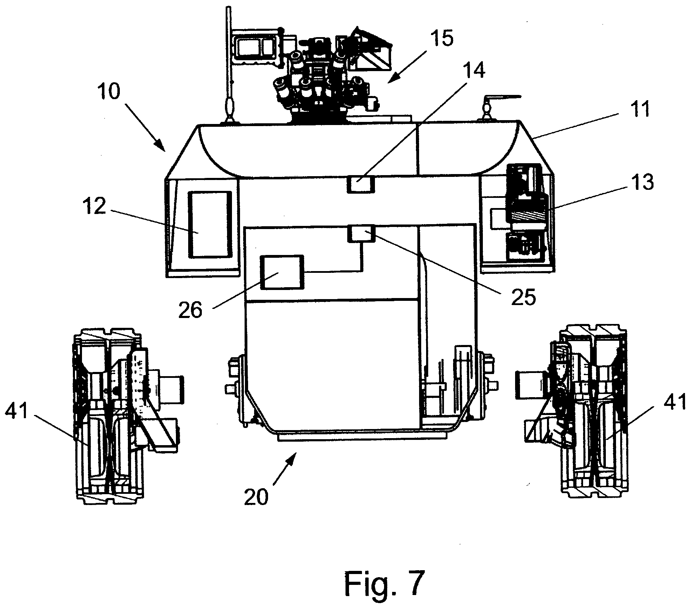

Die Darstellungen in Fig. 6 und 7 zeigen den modularen Aufbau des Fahrzeugs 1. Zur Aufnahme der Besatzung, eines Fahrers, eines Kommandanten, eines Richtschützen sowie weiterer Besatzungsmitglieder, weist das Fahrzeug 1 einen gegen militärische Bedrohungen geschützten Bereich auf. Der geschützte Bereich des Fahrzeugs 1 wird durch ein Grundmodul 20 gebildet. Wie der Darstellung in Fig. 5 zu entnehmen ist, gliedert sich das Innere des Grundmoduls 20 in einen Bedienbereich 22, aus welchem heraus der Fahrer das Fahrzeug 1 steuert, einen Triebwerksbereich 23, in welchem das Triebwerk 29 zur Landfahrt angeordnet ist, und einen Mannschaftsbereich 24, in welchem die restlichen Besatzungsmitglieder aufgenommen werden. Der Triebwerksbereich 23 ist zwischen dem Bedienbereich 22 und dem Mannschaftsbereich 24 angeordnet. Im Triebwerkbereich 23 ist ein Notdurchstieg 23.1 vorgesehen, über welchen Besatzungsmitglieder von dem Bedienbereich 22 in den Mannschaftsbereich 24 gelangen können und umgekehrt.

Das Grundmodul 20 weist zwei Kettenlaufwerke 41 auf. Die Kettenlaufwerke 41 werden durch ein im Inneren des Grundmoduls 20 angeordnetes Triebwerk 29 angetrieben.

Im Bereich oberhalb des Grundmoduls 20 ist ein Schwimmmodul 10 vorgesehen. Das Schwimmmodul 10 ist im Gegensatz zu dem aus Panzerstahl bestehenden Grundmodul 20 aus einem Leichtbauwerkstoff gefertigt. Geeignete Leichtbauwerkstoffe sind beispielsweise Aluminium, Magnesium, Titan, Legierungen hieraus oder Faserverbundwerkstoffe.

Das Schwimmmodul 10 weist als wesentliches Element einen Auftriebskörper 11 auf, durch welchen das Fahrzeug 1 schwimmfähig wird. Zur Verbesserung der Strömungseigenschaften weist das Schwimmmodul 10 eine schiffsbugförmige Außenkontur auf. Im Bugbereich 2 ist das Schwimmmodul 10 im Gegensatz zum Heck 3 des Schwimmmoduls 10 abgerundet ausgebildet.

Zudem ist an dem Schwimmmodul 10 ein Wasserantrieb 12 vorgesehen, über welchen das Fahrzeug 1 im Wasser angetrieben werden kann. Der Wasserantrieb 12 ist vorzugsweise als Wasserstrahlantrieb ausgebildet.

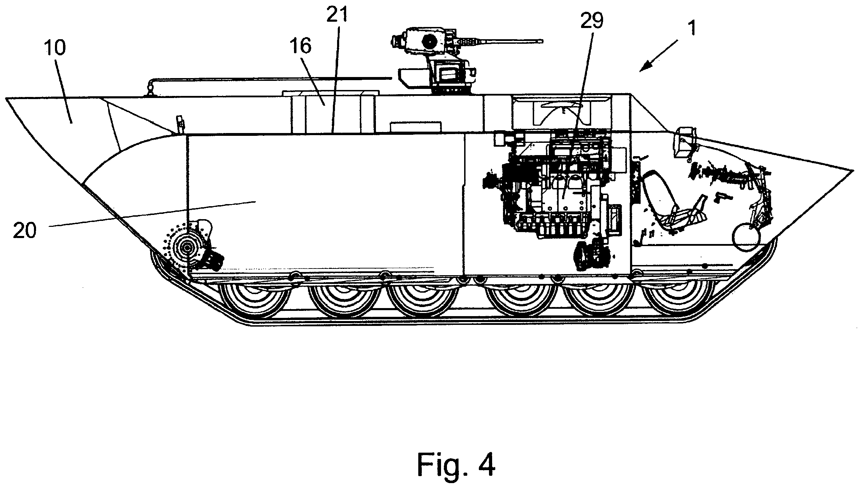

Der Fig. 6 ist zu entnehmen, dass das Schwimmmodul 10 einen U-förmigen Querschnitt aufweist und das Grundmodul 20 bugseitig sowie seitlich umgreift. An seiner Oberseite weist das Schwimmmodul 10 eine Ausnehmung 16 auf, welche derart angeordnet ist, dass eine Luke 21 des Grundmoduls 20 beim Betrieb des Fahrzeugs 1 als Wasserfahrzeug geöffnet werden kann, vgl. Fig. 4.

An der Oberseite des Schwimmmoduls 10 ist ferner eine Lafette 15 vorgesehen, in welcher eine fernsteuerbare Waffe aufgenommen ist, die aus dem Inneren des Fahrzeugs 1, insbesondere aus dem geschützten Bereich heraus, bedient werden kann.

Um möglichst kompakte Abmessungen des Fahrzeugs 1 einzuhalten, ist an dem Schwimmmodul 10 ein Landfahraggregat 13 zum Betrieb des Fahrzeugs 1 als Landfahrzeug vorgesehen. Das Landfahraggregat 13 dient zur Landfahrt, d.h. es wird während der Landfahrt betrieben. Auch bei der Wasserfahrt kann das Landfahrtaggregat 13 zugeschaltet werden. Da das Landfahraggregat 13 an dem Schwimmmodul 20 angeordnet ist, ist es nicht erforderlich, in dem Grundmodul 20 einen Bauraum für das Landfahraggregat 13 vorzuhalten, so dass das Grundmodul insgesamt kompakt gestaltet sein kann.

Wie der Darstellung in Fig. 7 entnommen werden kann, ist das Landfahraggregat 13 innerhalb des Auftriebskörpers 11 des Schwimmmoduls 10 angeordnet. Durch die Anordnung innerhalb des gas- und wasserdichten Auftriebskörpers 11 ist das Landfahraggregat 13 gegen die Einwirkung von Wasser und/oder gasförmigen Schadstoffen geschützt. Über die Positionierung des Landfahraggregats 13 an bzw. in dem Schwimmmodul 10 kann zudem der Trimm des Fahrzeugs 1 bei Wasserfahrt eingestellt werden. Insofern lässt sich über die Wahl der Position des Landfahraggregats 13 die Schwimmlage und damit die Manövrierfähigkeit des Fahrzeugs 1 im Wasser beeinflussen.

Beim Ausführungsbeispiel ist das Landfahraggregat 13 als Kühlanlage ausgebildet, über welche der Innenraum des Grundmoduls 20 während der Landfahrt gekühlt werden kann. Alternativ oder zusätzlich können andere Landfahraggregate 13, wie z. B. eine ABC-Anlage, eine Batterieanlage, ein Tank, eine Stromversorgungseinheit, eine Hydraulikpumpe oder ein Kompressor in dem Schwimmmodul angeordnet sein.

Durch die Anordnung des Landfahraggregats 13 an dem ungeschützten Schwimmmodul 10 ist das Landfahraggregat 13 militärischen Bedrohungen weitestgehend schutzlos ausgeliefert. Daher werden in dem Schwimmmodul bevorzugt solche Landfahraggregate 13 angeordnet, bei deren Ausfall in Notsituationen eine unter Umständen lebensrettende Restmobilität des Fahrzeugs 1 bestehen bleibt.

Das Schwimmmodul 10 kann zur Wasserfahrt mit dem Grundmodul 20 lösbar verbunden werden. Um die Anbindung des an dem Schwimmmodul 10 angeordneten Landfahraggregats 13 zu ermöglichen, weist das Schwimmmodul 10 eine Schnittstelle 14 auf, welche als Steckverbindung ausgebildet ist und mit einer korrespondierenden Schnittstelle 25 des Grundmoduls 20 verbunden werden kann. Über die Schnittstellen 14 und 25 kann das Landfahraggregat 13 mit anderen Fahrzeugkomponenten zusammenwirken. Ferner kann der Wasserantrieb 12 des Schwimmmoduls 10 über die Schnittstellen 14, 25 mit Energie versorgt werden.

In dem Grundmodul 20 ist ferner eine mit der Schnittstelle 25 verbundene Detektionseinrichtung 26 vorgesehen, über welche das mit dem Grundmodul 20 verbundene Modul 10 erkannt werden kann. Dies ist insofern von Bedeutung, als dass anstelle des Schwimmmoduls 10 andere Module 30 mit dem Grundmodul 20 verbunden werden können. Das Betriebsverhalten von Einrichtungen des Grundmoduls 20 wird in Abhängigkeit von dem jeweils angebundenen Modul 10, 30 eingestellt. Beispielsweise wird die Luftansaugung durch das Grundmodul 20 bei Erkennung eines Schwimmmoduls 10 derart eingestellt, dass die Luft ausschließlich über solche Lufteinlassöffnungen 17 angesaugt wird, die oberhalb der Wasserlinie liegen. Zudem kann die Schnittstelle 25 in Abhängigkeit von dem verbundenen Modul konfiguriert werden.

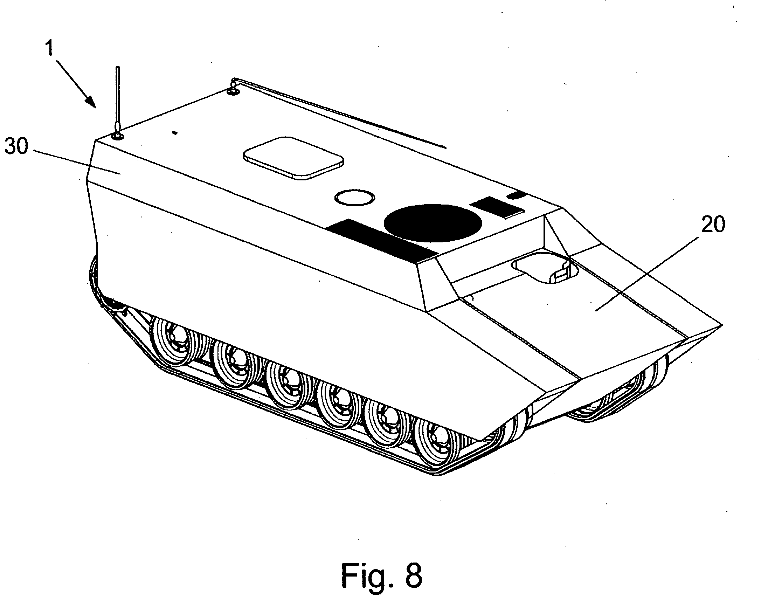

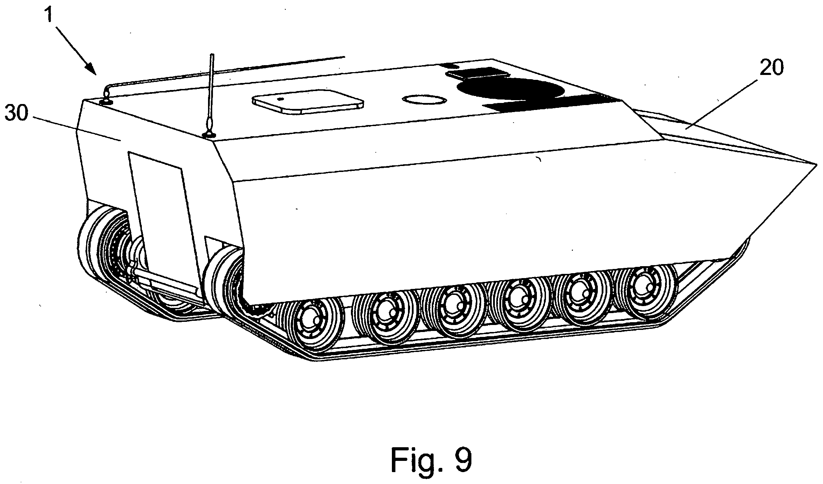

Die Darstellung in Fig. 8 und Fig. 9 zeigen ein Fahrzeug 1, bei welchem anstelle des Schwimmmoduls 10 ein Missionsmodul 30 mit dem Grundmodul 20 verbunden ist. Das Missionsmodul 30 ist als Landfahrmodul ausgebildet und weist keinen großvolumigen Auftriebskörper auf, d.h. dass das Fahrzeug 1 gemäß Fig. 8 und 9 nur an Land betrieben werden kann und nicht schwimmfähig ist.

Ebenso wie das zuvor beschriebene Schwimmmodul 20 weist auch das Missionsmodul 30 ein nicht näher dargestelltes Landfahraggregat 13 auf, wodurch sich bei der Landfahrt insoweit die gleichen Funktionalitäten erreichen lassen, die auch bei einem Schwimmmodul 10 der zuvor beschriebenen Art gegeben sind. Das entsprechende Landfahraggregat 13 kann derart in dem Missionsmodul 30 angeordnet sein, dass sich ein hinsichtlich dessen Verlademaß oder Gesamtgewicht optimiertes Gesamtfahrzeug ergibt.

### Bezugszeichen:

- 1: Fahrzeug
- 2: Bug
- 3: Heck

- 10: Schwimmmodul
- 11: Auftriebskörper
- 12: Wasserantrieb
- 13: Landfahraggregat
- 14: Schnittstelle
- 15: Lafette
- 16: Ausnehmung
- 17: Lufteinlass
- 20: Grundmodul
- 21: Luke
- 22: Bedienbereich
- 23: Triebwerksbereich
- 23.1: Notdurchstieg
- 24: Besatzungsbereich
- 25: Schnittstelle
- 26: Detektionseinrichtung
- 29: Triebwerk

- 30: Missionsmodul

- 41: Kettenlaufwerk

## Patentansprüche

1. Schwimmmodul mit einem Auftriebskörper (11) für ein insbesondere militärisches Fahrzeug (1), das zum Betrieb des Fahrzeugs (1) als Wasserfahrzeug an diesem befestigbar ist,
**gekennzeichnet durch**
ein Landfahraggregat (13) zum Betrieb des Fahrzeugs (1) als Landfahrzeug und durch eine als Steckverbindung ausgebildete Schnittstelle (14), um die Anbindung des an dem Schwimmmodul (10) angeordneten Landfahraggregats (13) zu ermöglichen, die mit einer korrespondierenden Schnittstelle (25) eines Grundmoduls (20) des Fahrzeugs (1) verbindbar ist.

2. Schwimmmodul nach Anspruch 1, **dadurch gekennzeichnet, dass** das Landfahraggregat (13) innerhalb des Auftriebskörpers (11) angeordnet ist.

3. Schwimmmodul nach einem der vorhergehenden Ansprüche, **gekennzeichnet durch** die Schnittstelle (14), über welche das Landfahraggregat (13) mit anderen Fahrzeugkomponenten zusammenwirken kann.

4. Schwimmmodul nach einem der vorhergehenden Ansprüche, **gekennzeichnet durch** eine schiffsbugförmige Außenkontur.

5. Schwimmmodul nach einem der vorhergehenden Ansprüche, **dadurch gekennzeichnet, dass** das Landfahraggregat als ABC-Anlage, Kühlanlage, Batterieanlage, Tank, Stromversorgungseinheit, Hydraulikpumpe oder als Kompressor ausgebildet ist.

6. Fahrzeug, insbesondere militärisches Fahrzeug, mit einem Grundmodul (20) insbesondere zur Aufnahme von Besatzungsmitgliedern,
**gekennzeichnet durch**
ein zum Betrieb des Fahrzeugs (1) als Wasserfahrzeug an diesem anordbares Schwimmmodul (10) nach einem der vorhergehenden Ansprüche.

7. Fahrzeug nach Anspruch 6, **dadurch gekennzeichnet, dass** das Schwimmmodul (10) derart ausgebildet ist, dass es das Grundmodul (20) bugseitig und/oder seitlich umgreift.

8. Fahrzeug nach einem der Ansprüche 6 oder 7, **dadurch gekennzeichnet, dass** das Schwimmmodul (10) oberhalb des Grundmoduls (20) anordbar ist.

9. Fahrzeug nach einem der Ansprüche 6 bis 8, **dadurch gekennzeichnet, dass** das Schwimmmodul (10) eine Ausnehmung (16) aufweist, welche derart angeordnet ist, dass eine Luke (21) des Grundmoduls (20) beim Betrieb des Fahrzeugs (1) als Wasserfahrzeug innerhalb der Ausnehmung (16) geöffnet werden kann.

10. Fahrzeug nach einem der Ansprüche 6 bis 9, **gekennzeichnet durch** ein Missionsmodul (30) zum Betrieb des Fahrzeugs (1) als Landfahrzeug, welches anstelle des Schwimmmoduls (10) wahlweise mit dem Grundmodul (20) verbindbar ist.

11. Fahrzeug nach einem der Ansprüche 6 bis 10, **dadurch gekennzeichnet, dass** ein Wasserantrieb (12) zum Antrieb des Fahrzeugs (1) bei Wasserfahrt an dem Schwimmmodul (10) angeordnet ist.

12. Fahrzeug nach Anspruch 11, **dadurch gekennzeichnet, dass** über die Schnittstelle (14) der Wasserantrieb (12) mit Energie versorgt wird.

13. Fahrzeug nach Anspruch 12, **dadurch gekennzeichnet, dass** das Grundmodul (20) eine Detektionseinrichtung (26) aufweist, über welche das mit dem Grundmodul (20) verbundene Modul (10, 30) detektiert werden kann.

## Claims

1. Flotation module which has a buoyancy body (11) for an in particular military vehicle (1) which, for operation of the vehicle (1) as a watercraft, can be fastened thereon,
**characterized by**
a land travel subassembly (13) for operation of the vehicle (1) as a land vehicle and by an interface (14), which is designed in the form of a plug-in connection, for allowing attachment of the land travel subassembly (13), which is arranged on the flotation module (10), which can be connected to a corresponding interface (25) of the main module (20) of the vehicle (1).

2. Flotation module according to Claim 1, **characterized in that** the land travel subassembly (13) is arranged within the buoyancy body (11).

3. Flotation module according to either of the preceding claims, **characterized by** the interface (14), via which the land travel subassembly (13) can interact with other vehicle components.

4. Flotation module according to one of the preceding claims, **characterized by** a prow-like outer contour.

5. Flotation module according to one of the preceding claims, **characterized in that** the land travel subassembly is designed in the form of an ABC system, cooling system, battery system, tank, power-supply unit, hydraulic pump or compressor.

6. Vehicle, in particular military vehicle, having a main module (20) in particular for accommodating crew members,
**characterized by** a flotation module (10) according to one of the preceding claims which, for operation of the vehicle (1) as a watercraft, can be arranged thereon.

7. Vehicle according to Claim 6, **characterized in that** the flotation module (10) is designed such that it encompasses the main module (20) at the prow and/or laterally.

8. Vehicle according to either of Claims 6 or 7, **characterized in that** the flotation module (10) can be arranged above the main module (20).

9. Vehicle according to one of Claims 6 to 8, **characterized in that** the flotation module (10) has an aperture (16), which is arranged such that a hatch (21) of the main module (20), during operation of the vehicle (1) as a watercraft, can be opened within the aperture (16).

10. Vehicle according to one of Claims 6 to 9, **characterized by** a mission module (30) for operation of the vehicle (1) as a land vehicle, which can be connected optionally to the main module (20) instead of the flotation module (10).

11. Vehicle according to one of Claims 6 to 10, **characterized in that** a water drive (12), for driving the vehicle (1) during water travel, is arranged on the flotation module (10).

12. Vehicle according to Claim 11, **characterized in that** by means of the interface (14), the water drive (12) is supplied with power.

13. Vehicle according to Claim 12, **characterized in that** the main module (20) has a detection device (26), which can detect the module (10, 30) connected to the main module (20).

## Revendications

1. Module de flottabilité avec un corps de poussée ascensionnelle (11) pour un véhicule en particulier militaire (1), qui peut être fixé à ce dernier en vue de l'utilisation du véhicule (1) comme véhicule flottant, **caractérisé par** un groupe de circulation terrestre (13) en vue de l'utilisation du véhicule (1) comme véhicule terrestre et par une interface (14) conçue comme un connecteur pour permettre la connexion du circulation terrestre (13) ordonné sur le module flottant (10), laquelle peut être connecter avec une l'interface correspondante (25) du module de base (20) du véhicule (1).

2. Module de flottabilité selon la revendication 1, **caractérisé en ce que** le groupe de circulation terrestre (13) est disposé à l'intérieur du corps de poussée ascensionnelle (11).

3. Module de flottabilité selon l'une quelconque des revendications précédentes, **caractérisé par** l'interface (14), au moyen de laquelle le groupe de circulation terrestre (13) peut coopérer avec d'autres composantes du véhicule.

4. Module de flottabilité selon l'une quelconque des revendications précédentes, **caractérisé par** un contour extérieur en forme de proue de navire.

5. Module de flottabilité selon l'une quelconque des revendications précédentes, **caractérisé en ce que** le groupe de circulation terrestre est réalisé sous la forme d'une installation ABC, d'une installation de refroidissement, d'une installation de batterie, d'un réservoir, d'une unité de fourniture de courant, d'une pompe hydraulique ou d'un compresseur.

6. Véhicule, en particulier véhicule militaire, comportant un module de base (20) destiné en particulier à accueillir des membres d'équipage, **caractérisé par** un module de flottabilité (10) selon l'une quelconque des revendications précédentes pouvant être agencé sur le véhicule (1) en vue de l'utilisation de celui-ci comme véhicule flottant.

7. Véhicule selon la revendication 6, **caractérisé en ce que** le module de flottabilité (10) est réalisé de telle manière qu'il entoure le module de base (20) du côté de la proue et/ou sur les côtés.

8. Véhicule selon une des revendications 6 ou 7, **caractérisé en ce que** le module de flottabilité (10) peut être agencé au-dessus du module de base (20).

9. Véhicule selon l'une quelconque des revendications 6 à 8, **caractérisé en ce que** le module de flottabilité (10) présente une découpe (16), qui est disposée de telle manière qu'une écoutille (21) du module de base (20) puisse être ouverte à l'intérieur de la découpe (16) lors de l'utilisation du véhicule (1) comme véhicule flottant.

10. Véhicule selon l'une quelconque des revendications 6 à 9, **caractérisé par** un module de mission (30) en vue de l'utilisation du véhicule (1) comme véhicule terrestre, qui peut au choix être assemblé au module de base (20) au lieu du module de flottabilité (10).

11. Véhicule selon l'une quelconque des revendications 6 à 10, **caractérisé en ce qu'**un entraînement aquatique (12) est disposé sur le module de flottabilité (10) en vue de l'entraînement du véhicule (1) lors d'un déplacement sur l'eau.

12. Véhicule selon la revendication 11, **caractérisé en ce que** par l'interface (14), l'entraînement aquatique (12) est alimenté en énergie.

13. Véhicule selon la revendication 12, **caractérisé en ce que** le module de base (20) présente un système de détection (26), au moyen duquel le module (10, 30) assemblé au module de base (20) peut être détecté.
